# EUROPEAN PATENT APPLICATION

(11) **EP 3 726 776 A1**
(43) Date of publication of application: **21.10.2020**
(21) Application number: 19170104.4
(22) Date of filing: 18.04.2019
(51) Int. Cl.: H04L 12/24, H04L 12/40

(54) **METHOD FOR AN AUTONOMIC OR AI-ASSISTED VALIDATION AND/OR REJECTION AND/OR DECISION MAKING REGARDING BUS MESSAGES ON A CONTROLLER AREA NETWORK BUS SYSTEM, CONTROLLER AREA NETWORK BUS SYSTEM, DETECTION AND/OR DECISION ENTITY, COMPUTER PROGRAM AND COMPUTER-READABLE MEDIUM**

(71) Applicant: Xantaro Deutschland GmbH, 20099 Hamburg (DE)
(72) Inventor: The designation of the inventor has not yet been filed
(74) Representative: Schwöbel, Thilo K.

(57) **Abstract**

The invention relates to a method for an autonomic or Al-assisted validation and/or rejection and/or decision making regarding bus messages on a controller area network bus system, wherein the controller area network bus system comprises a controller area network bus as well as a plurality of electronic control units, wherein in the controller area network bus system, a plurality of bus messages are continuously exchanged or transmitted between the electronic control units using the controller area network bus, wherein each one of the plurality of bus messages comprises, respectively, an identifier portion indicating an identifier information, and a data portion indicating a value information,
wherein the controller area network bus system either comprises or is provided access to a detection and/or decision entity, wherein the detection and/or decision entity continuously receives and detects newly generated or incoming bus messages of or within the controller area network bus system, wherein - regarding a specific newly generated or incoming bus message, the specific bus message comprising an identifier portion indicating a specific identifier information, and a data portion indicating a specific value information - the method comprises the following steps:
-- in a first step, based on or dependent on both
-- the specific identifier information of the specific bus message and/or the specific value information of the specific bus message, and
-- the pieces of identifier information and/or the pieces of value information of bus messages prior to the specific bus message,
a plausibility value is generated, by the detection and/or decision entity, regarding the specific bus message, and, especially thereafter, the specific bus message becomes part of the plurality of bus messages,
-- in a second step, based on or dependent on the plausibility value regarding the specific bus message, a decision is taken regarding the specific newly generated or incoming bus message or the specific newly generated or incoming bus message is accepted or validated and/or rejected.

## Description

### BACKGROUND

The present invention relates to a method for an autonomic or Al-assisted validation and/or rejection and/or decision making regarding bus messages on a controller area network bus system, wherein the controller area network bus system comprises a controller area network bus as well as a plurality of electronic control units.

Furthermore, the present invention relates to a controller area network bus system for an autonomic or Al-assisted validation and/or rejection and/or decision making regarding bus messages on the controller area network bus system, wherein the controller area network bus system comprises a controller area network bus as well as a plurality of electronic control units.

Additionally, the present invention relates to a detection and/or decision entity for an autonomic or Al-assisted validation and/or rejection and/or decision making regarding bus messages on a controller area network bus system, wherein the detection and/or decision entity is provided to be used in the controller area network bus system comprising a controller area network bus as well as a plurality of electronic control units.

Furthermore, the present invention relates to a corresponding computer program and computer-readable medium to perform the inventive method.

Many modern vehicles and other systems - especially automobiles, air planes, ships, production equipment machinery and the like - operate via the correct functioning of various discrete electronic control units, sensors, and/or actuators that communicate over one or more system-internal networks (such as, e.g., controller area networks), i.e. especially in-vehicle networks.

Such known system networks, especially in-vehicle networks, like controller area network bus systems, are realized as so-called broadcast networks, such that messages transmitted on these system networks or in-vehicle networks often only include (especially instead of source or destination addresses) unique identifiers to label a respective message transmitted on the in-vehicle system. Such a message transmitted (or broadcast) on the in-vehicle system typically comprises payload data or values to be transmitted from the broadcasting entity (or node) to a receiving entity (or node) being connected to the controller area network bus system. As such, each entity or node being connected to such an in-vehicle network, especially a controller area network bus, generally both receives each in-vehicle network message that is broadcast over the network, and is required to decide whether to act upon or ignore the received message, typically based on the respective identifier the message carries.

In such known system networks, especially in-vehicle networks, connected entities or nodes have typically been designed to trust the messages broadcast on the in-vehicle network that they receive.

However, it recently emerged that this assumption cannot be maintained unconditionally any longer, as has be shown by various ways to cause a system, especially a vehicle, and particularly an automobile, to perform unexpected and/or undesired actions by, e.g., connecting to the system's networks (e.g., using a diagnostic port of the vehicle or a compromised vehicle network node having a wireless communication interface and/or a hardware implant and/or a physical port like USB, SD Card, etc.) and/or by broadcasting malicious messages over the system's network. Especially, examples of such attacks have been reported such that the vehicle has been caused to display or report incorrect values regarding its speed or even activate actuators or the vehicle such as applying its brakes and/or turning its steering wheel.

### SUMMARY

An object of the present invention is to provide a comparatively simple and efficient method for an autonomic or Al-assisted (artificial intelligence-assisted) validation, decision making, troubleshooting and/or performance enhancement regarding bus messages on a controller area network bus system such that anomalous or fraudulent bus messages can be determined or detected and/or validated and/or rejected and/or a decision making performed, especially in order to ultimately be able to help avoid damages of or associated with systems, especially vehicles, concerned and/or to be able to protect such systems, especially vehicles, and/or associated persons, especially drivers, passengers and/or pedestrians or other road users involved.

The object of the present invention is achieved by a method for an autonomic or Al-assisted validation and/or rejection and/or decision making regarding bus messages on a controller area network bus system, wherein the controller area network bus system comprises a controller area network bus as well as a plurality of electronic control units, wherein in the controller area network bus system, a plurality of bus messages are continuously exchanged or transmitted between the electronic control units using the controller area network bus, wherein each one of the plurality of bus messages comprises, respectively, an identifier portion indicating an identifier information, and a data portion indicating a value information, wherein the controller area network bus system either comprises or is provided access to a detection and/or decision entity, wherein the detection and/or decision entity continuously receives and detects newly generated or incoming bus messages of or within the controller area network bus system, wherein - regarding a specific newly generated or incoming bus message, the specific bus message comprising an identifier portion indicating a specific identifier information, and a data portion indicating a specific value information - the method comprises the following steps:
-- in a first step, based on or dependent on both
   -- the specific identifier information of the specific bus message and/or the specific value information of the specific bus message, and
   -- the pieces of identifier information and/or the pieces of value information of bus messages prior to the specific bus message,
   a plausibility value is generated, by the detection and/or decision entity, regarding the specific bus message, and, especially thereafter, the specific bus message becomes part of the plurality of bus messages,
-- in a second step, based on or dependent on the plausibility value regarding the specific bus message, a decision is taken regarding the specific newly generated or incoming bus message or the specific newly generated or incoming bus message is accepted or validated and/or rejected.

According to the present invention, an autonomic and/or Al-assisted method for validation and/or rejection and/or decision making regarding bus messages on a controller area network bus system is proposed. Thereby, it is advantageously possible to better avoid damages of or associated with systems using such an inventive method, especially vehicles, and/or to be able to protect such systems, especially vehicles, and/or associated persons.

In the context of the present invention, it is proposed to apply the inventive method in order to provide an autonomic or Al-assisted (or, rather, autonomic and/or Al-assisted) validation and/or rejection and/or decision making regarding bus messages on a controller area network bus system. Alternatively or cumulatively, it is proposed to apply the inventive method in order to provide for an autonomic or Al-assisted (or, rather, autonomic and/or Al-assisted) protection of such a controller area network bus system. In this respect, autonomic and/or Al-assisted is intended to mean, on the one side of the spectrum of possible realizations, an approach relying also on human involvement and decision making, especially in case of detecting anomalous behavior or attacks on a system that are regionally increased and/or increased with respect to a certain type of system or vehicle, and, on the other side of the spectrum of possible realizations, an approach either relying not at all or only in comparatively small parts on human involvement and decision making and essentially operating autonomously (albeit, perhaps, not in a fully autonomic manner).

According to the present invention, the controller area network bus system comprises a controller area network bus as well as a plurality of electronic control units. In such a system, typically a plurality of bus messages are continuously exchanged or transmitted between the electronic control units using the controller area network bus, and, typically, each one of the plurality of bus messages comprises, respectively, an identifier portion and a data portion. The identifier portion typically refers to or indicates an identifier information, whereas the data portion refers to or indicates a value information. For example, for a specific message being sent or transmitted or broadcast on the controller area network bus, the identifier portion might consist of or might comprise an identifier information indicating that the message has been generated by a wheel revolution sensor (of a specific wheel) of a vehicle, and the data portion might consist of or might comprise a value information indicating a certain number or revolutions (especially per time interval) of the specific wheel of the vehicle.

Furthermore according to the present invention, the controller area network bus system comprises or is provided access to a detection and/or decision entity. The detection and/or decision entity continuously receives and detects (or analyses) newly generated or incoming bus messages of or within the controller area network bus system. As with all the bus messages being transmitted or broadcast on the controller area network bus, also the newly generated or incoming bus messages comprise, respectively, an identifier portion as well as a data portion. Technically, the newly generated or incoming bus messages are not different from the plurality of preceding bus messages, except that such newly or incoming bus messages are typically generated, or at least transmitted or broadcast, after the preceding ones. In order to be able to specifically refer to one specific newly generated or incoming bus message, the identifier information of the respective identifier portion (of the specific newly generated or incoming bus message) is called specific identifier information (or the respective identifier portion is called specific identifier portion), and the value information of the respective data portion (of the specific newly generated or incoming bus message) is called specific value information (or the respective data portion is called specific data portion). This means that regarding such a specific newly generated or incoming bus message, the specific bus message comprises, as its identifier portion, a specific identifier information, and, as its data portion, a specific value information.

Hence, according to the present invention, it is supposed that a plurality of bus messages have already arrived (or been broadcast) on the controller area network bus, and that at least one further, newly generated or incoming, bus message ("specific bus message") is received (or present on the bus). In such a situation, the method comprises at least a first step, wherein, based on or dependent on both
-- the specific identifier information of the specific bus message and/or the specific value information of the specific bus message, and
-- the pieces of identifier information and/or the pieces of value information of bus messages prior to the specific bus message,
a plausibility value is generated, by the detection and/or decision entity, regarding the specific bus message.

Thereafter, typically, the (previously specific) incoming bus message is treated as a preceding bus message, i.e. it becomes part of the "plurality of bus messages" (or "preceding bus messages" from the point of view of a newly incoming bus message). Furthermore the method comprises - besides the first step - at least the second step, according to which, based on or dependent on the plausibility value regarding the specific bus message, a decision is taken regarding the specific newly generated or incoming bus message or the specific newly generated or incoming bus message is accepted or validated and/or rejected.

According to a preferred embodiment of the present invention, the first and second steps are repeatedly executed for each newly incoming or generated (or broadcast) bus message on the controller area network bus (or at least for certain types of (perhaps more important or safety critical) bus messages on the controller area network bus), i.e. regarding each newly generated or incoming specific bus message (or at least for certain types thereof), the first and second step is executed with the previously specific bus message being part of the plurality of bus messages prior to the specific bus message.

Thereby, it is advantageously possible to realize an iterative treatment of successively incoming bus messages in order to be able to provide or apply the autonomic or Al-assisted validation and/or rejection and/or decision making regarding incoming messages. This means that, a plausibility value is generated based on or dependent on both a property or properties of the newly incoming message or messages ("specific bus message" or "specific bus messages"), as well as a property or properties of bus messages prior to the specific bus message (or specific bus messages). Hence, based on this plausibility value, according to the present invention, a decision is able to be taken regarding the specific newly generated or incoming bus message (or bus messages) or the specific newly generated or incoming bus message (or messages) is (are) accepted or validated and/or rejected.

According to a further preferred embodiment according to the present invention, in a first sub-step during the first step, and based on or dependent on both
-- the specific identifier information of the specific bus message, and
-- the pieces of identifier information of bus messages prior to the specific bus message or
   the pieces of identifier information of bus messages prior to the specific bus message as well as the pieces of value information of bus messages prior to the specific bus message,
   a first plausibility indication is generated, by the detection and/or decision entity, regarding the specific bus message,
   wherein, if applicable, in a second sub-step during the first step, and based on or dependent on both
-- the specific value information of the specific bus message, and
-- the pieces of value information of bus messages prior to the specific bus message,
or
the pieces of value information of bus messages prior to the specific bus message as well as the pieces of identifier information of bus messages prior to the specific bus message,
a second plausibility indication is generated, by the detection and/or decision entity, regarding the specific bus message,
wherein either only the first sub-step of the first step is executed, or both the first and the second sub-steps of the first step is executed,
wherein
-- either the plausibility value regarding the specific bus message is generated - especially in case that only the first sub-step of the first step is executed - based on or dependent on the first plausibility indication only,
-- or the plausibility value regarding the specific bus message is generated - especially in case that both the first and second sub-steps of the first step are executed - based on or dependent on the first plausibility indication and based on or dependent on the second plausibility indication.

Hence, according to the present invention, especially the following situations are possible:
-- in some cases of "specific" bus messages (hereinafter also called "first category of cases or situations), the plausibility value (regarding this "specific" bus message) is generated (or is able to be generated) based on or dependent on the first plausibility indication only, and, hence, the second sub-step does not necessarily need to be executed or performed (i.e., especially, only the first sub-step of the first step is executed); this means that the plausibility value is able to be generated based on the knowledge of - regarding the specific bus message - the specific identifier information only (of course together with the "historic data" of the preceding bus messages, i.e. either the pieces of identifier information of the preceding bus messages (prior to the specific bus message) only or the pieces of both identifier information as well as value information of the preceding bus messages),
-- in some other cases of "specific" bus messages (hereinafter also called "second category of cases or situations), the plausibility value (regarding this "specific" bus message) is generated based on or dependent on the first plausibility indication and based on or dependent on the second plausibility indication (i.e., especially, both the first and second sub-steps of the first step are executed); this means that the plausibility value is generated based on the knowledge of - regarding the specific bus message - both the specific identifier information and the specific value information (of course together with the "historic data" of the preceding bus messages, i.e. the pieces of both identifier information and value information of the preceding bus messages).

Hence, according to preferred embodiments according to the present invention, the second sub-step is always (for each specific newly incoming bus message) able to be performed but it is not necessarily required, in all cases or situations of a specific incoming bus message, to be executed.

It is thereby advantageously possible according to the present invention that - for specific bus messages of the first category - it is possible to already draw a conclusion (regarding the autonomic or Al-assisted validation and/or rejection and/or decision making regarding the specific bus message) based only on, on the one hand, the specific identifier information of the specific bus message, and, on the other hand, the pieces of identifier information of bus messages prior to the specific bus message. Hence, for such specific bus messages of the first category, it is not required to evaluate or to analyze the specific value information of the specific bus message, and the pieces of value information of bus messages prior to the specific bus message. This means that, at least for such specific bus messages of the first category, the inventive method is able to be performed faster and/or requiring less computing resources (as the second sub-step is not required to be performed). Hence, also the overall performance of the method is able to be increased - depending, of course, on the share of specific bus messages falling in the first category among all specific bus messages considered (i.e. including those specific bus messages falling in the first category and those falling in the second category).

According to still further preferred embodiments according to the present invention, - based on or dependent on the bus messages prior to the specific bus message - a first prediction range information and/or a second prediction range information is generated or identified or retrieved by the detection and/or decision entity, wherein the first prediction range information corresponds to an anticipated (or predicted) range of identifier information of the specific identifier portion of the specific bus message, wherein the second prediction range information corresponds to an anticipated (or predicted) range of value information of the specific data portion of the specific bus message,
wherein the first plausibility indication is based on or dependent on the accordance or overlap between the specific identifier information of the specific bus message on the first prediction range information,
wherein, if applicable, the second plausibility indication is based on or dependent on the accordance or overlap between the specific value information of the specific bus message on the second prediction range information.
Again, according to the present invention, especially the following situations are possible:
-- in cases of the specific bus messages falling into the first category of cases or situations, the plausibility value (regarding this "specific" bus message) is generated (or is able to be generated) based on or dependent on the first plausibility indication only, and, hence, the second sub-step does not necessarily need to be executed or performed (i.e., especially, only the first sub-step of the first step is executed),
-- in other cases of the specific bus messages falling into the second category of cases or situations, the plausibility value (regarding this "specific" bus message) is generated based on or dependent on both the first plausibility indication and the second plausibility indication (i.e., especially, both the first and second sub-steps of the first step are executed). Hence, according to preferred embodiments according to the present invention, the second sub-step is always (for each specific newly incoming bus message) able to be performed but it is not necessarily required, in all cases or situations of a specific incoming bus message, to be executed.

Again, it is thereby advantageously possible according to the present invention that - for specific bus messages of the first category - it is possible to already draw a conclusion (regarding the autonomic or Al-assisted validation and/or rejection and/or decision making regarding the specific bus message) based only on, on the one hand, the specific identifier information of the specific bus message, and, on the other hand, the pieces of identifier information of bus messages prior to the specific bus message (or the pieces of value information of bus messages prior to the specific bus message as well as the pieces of identifier information of bus messages prior to the specific bus message). Hence, for such specific bus messages of the first category, it is in any case not required to evaluate or to analyze the specific value information of the specific bus message (and, especially if only the pieces of identifier information of bus messages prior to the specific bus message are used to generate the first plausibility indication, it is furthermore not required to evaluate or to analyze the pieces of value information of bus messages prior to the specific bus message). This means that, at least for such specific bus messages of the first category, the inventive method is able to be performed faster and/or requiring less computing resources (as the second sub-step is not required to be performed).

According to still a further preferred embodiment according to the present invention,
-- either autonomic or Al-assisted validation and/or rejection and/or decision making is applied within the detection and/or decision entity
-- and/or autonomic or Al-assisted validation and/or rejection and/or decision making is applied within a further machine intelligence entity - the further machine intelligence entity being especially provided outside of the controller area network bus system - to generate validation and/or rejection and/or decision making rules information to be stored in the detection and/or decision entity,
wherein the method comprises the following additional third step prior to the first step:
-- a plurality of bus messages within the controller area network bus system, generated during a period of time, are provided to the detection and/or decision entity and/or to the further machine intelligence entity, wherein at least
   -- a machine learning approach, and
   -- a state machine-based approach
are used to generate validation and/or rejection and/or decision making rules information - especially to be stored in the detection and/or decision entity -, and/or first and/or second prediction range information - especially to be stored in the detection and/or decision entity.

Hence, according to the present invention, one possible kind of implementations of the inventive method and a corresponding inventive system involves realizing a machine learning or machine intelligence capability within the detection and/or decision entity (of the controller area network bus system), this detection and/or decision entity being able to generate validation and/or rejection and/or decision making rules information and/or first and/or second prediction range information. A further possible kind of implementations of the inventive method and a corresponding inventive system involves realizing the machine learning or machine intelligence capability (i.e. the capability to generate validation and/or rejection and/or decision making rules information and/or first and/or second prediction range information) within a further machine intelligence entity being especially provided outside of the controller area network bus system, and to provide the detection and/or decision entity with the respective validation and/or rejection and/or decision making rules information and/or first and/or second prediction range information, either initially or on a continuous basis. Still a further possible kind of implementations of the inventive method and a corresponding inventive system involves realizing the machine learning or machine intelligence capability within both the detection and/or decision entity and the further machine intelligence entity (e.g. as a shared machine learning or machine intelligence capability) such as to provide the detection and/or decision entity with the respective validation and/or rejection and/or decision making rules information and/or first and/or second prediction range information (generated by the further machine intelligence entity) and/or such as to provide the further machine intelligence entity with the respective validation and/or rejection and/or decision making rules information and/or first and/or second prediction range information (generated by the detection and/or decision entity), both either initially or on a continuous basis.

Thereby, it is advantageously possible that the inventive method and the corresponding inventive system can be realized in a flexible manner and according to different implementation needs of different setup scenarios. For example, according to certain embodiments of the present invention, only the validation and/or rejection and/or decision making rules information and/or first and/or second prediction range information needs to be stored in the detection and/or decision entity, i.e. within the controller area network bus system. However, according to further embodiments the controller area network bus system (or the detection and/or decision entity) is able to be provided with enhanced machine learning or machine intelligence capability such that the validation and/or rejection and/or decision making rules information and/or first and/or second prediction range information are able to be derived from history of the behavior of the controller area network bus system and its components.

According to further preferred embodiments according to the present invention, in the third step, the detection and/or decision entity and/or the further machine intelligence entity - besides using a machine learning approach, and a state machine-based approach - uses
-- supervised learning through human interaction, especially in view of performing validation and/or rejection and/or decision making regarding specific bus messages, and/or
-- unsupervised learning in view of performing validation and/or rejection and/or decision making regarding specific bus messages and/or,
-- expert system knowledge or expert system information, especially in view of performing validation and/or rejection and/or decision making regarding specific bus messages, based
on dynamically updated ontologies or semantic knowledge containing bus system knowledge.

It is thereby advantageously possible to realize a higher degree of autonomous behavior according to the inventive method or by a corresponding inventive system.

According to still further preferred embodiments according to the present invention, by means of the detection and/or decision entity, an autonomic agent is realized by means of which an autonomic validation and/or rejection and/or decision making regarding specific bus messages is performed.

It is thereby advantageously possible to render the process to generate validation and/or rejection and/or decision making rules information and/or first and/or second prediction range information less cumbersome and more efficient.

Additionally, the invention relates to and the object of the present invention is achieved by a controller area network bus system for an autonomic or Al-assisted validation and/or rejection and/or decision making regarding bus messages on the controller area network bus system, wherein the controller area network bus system comprises a controller area network bus as well as a plurality of electronic control units, wherein in the controller area network bus system is configured such that a plurality of bus messages are continuously exchanged or transmitted between the electronic control units using the controller area network bus, wherein each one of the plurality of bus messages comprises, respectively, an identifier portion indicating an identifier information, and a data portion indicating a value information,
wherein the controller area network bus system either comprises or is provided access to a detection and/or decision entity, wherein the detection and/or decision entity continuously receives and detects newly generated or incoming bus messages of or within the controller area network bus system, wherein - regarding a specific newly generated or incoming bus message, the specific bus message comprising an identifier portion indicating a specific identifier information, and a data portion indicating a specific value information - the controller area network bus system is configured such that:
-- based on or dependent on both
   -- the specific identifier information of the specific bus message and/or the specific value information of the specific bus message, and
   -- the pieces of identifier information and/or the pieces of value information of bus messages prior to the specific bus message,
   a plausibility value is generated, by the detection and/or decision entity, regarding the specific bus message, and, especially thereafter, the specific bus message becomes part of the plurality of bus messages,
-- based on or dependent on the plausibility value regarding the specific bus message, a decision is taken regarding the specific newly generated or incoming bus message or the specific newly generated or incoming bus message is accepted or validated and/or rejected.

Additionally, the object of the present invention is achieved by and the invention relates to
-- a detection and/or decision entity used in an inventive controller area network bus system and/or
-- a detection and/or decision entity for an autonomic or Al-assisted validation and/or rejection and/or decision making regarding bus messages on a controller area network bus system, wherein the detection and/or decision entity is provided to be used in the controller area network bus system comprising a controller area network bus as well as a plurality of electronic control units, and a plurality of bus messages - each one of which comprising, respectively, an identifier portion indicating an identifier information, and a data portion indicating a value information - being continuously exchanged or transmitted between the electronic control units using the controller area network bus,
wherein the detection and/or decision entity is configured to continuously receive and detect newly generated or incoming bus messages of or within the controller area network bus system, wherein - regarding a specific newly generated or incoming bus message, the specific bus message comprising an identifier portion indicating a specific identifier information, and a data portion indicating a specific value information - the detection and/or decision entity is further configured such that:
-- based on or dependent on both
   -- the specific identifier information of the specific bus message and/or the specific value information of the specific bus message, and
   -- the pieces of identifier information and/or the pieces of value information of bus messages prior to the specific bus message,
   a plausibility value is generated, by the detection and/or decision entity, regarding the specific bus message, and, especially thereafter, the specific bus message becomes part of the plurality of bus messages,
-- in a second step, based on or dependent on the plausibility value regarding the specific bus message, a decision is taken regarding the specific newly generated or incoming bus message or the specific newly generated or incoming bus message is accepted or validated and/or rejected.

Additionally, the present invention relates to a computer program comprising a computer readable program code which, when executed on a computer or on a detection and/or decision entity or on a further machine intelligence entity or in part on a detection and/or decision entity and in part on a further machine intelligence entity, causes the computer or the detection and/or decision entity or the further machine intelligence entity to perform a method as described before.

Furthermore, the present invention relates to a computer-readable medium comprising instructions which when executed on on a computer or on a detection and/or decision entity or on a further machine intelligence entity or in part on a detection and/or decision entity and in part on a further machine intelligence entity, causes the computer or the detection and/or decision entity or the further machine intelligence entity to perform a method as described before.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an embodiment of an inventive controller area network bus system.
Figure 2 schematically illustrates an embodiment of an inventive controller area network bus system further detailing the transmission of bus messages between different components or nodes of the system.
Figure 3 schematically illustrates two bus messages.
Figure 4 schematically illustrates a functionality according to the inventive method.
Figures 5, 6 and 7 schematically illustrate a functionality according to different variants of the inventive method.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

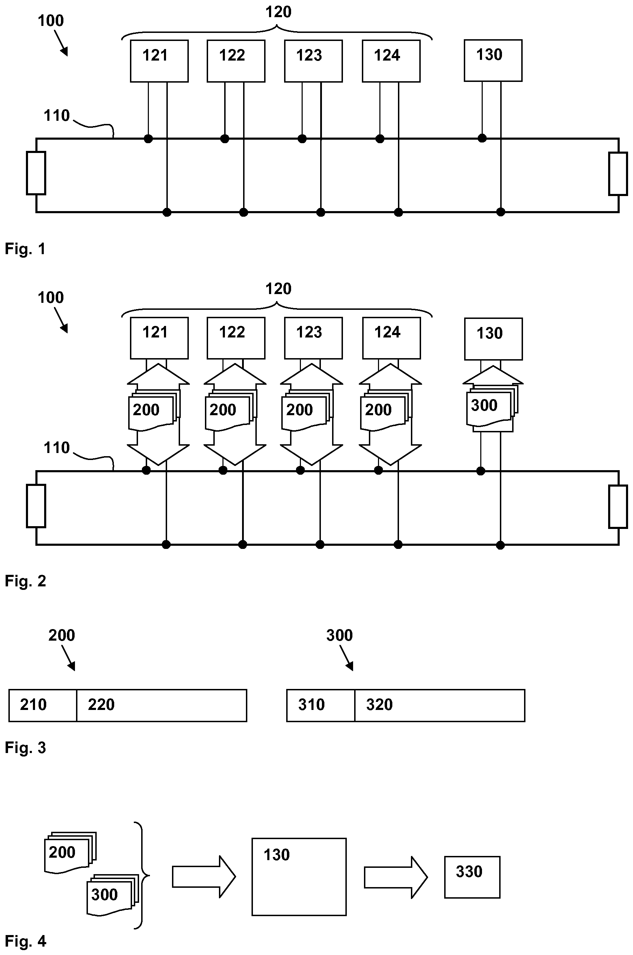

In Figure 1, an embodiment of an inventive controller area network bus system 100 is schematically shown. The controller area network bus system is an example of an in-vehicle network - e.g. within an automobile or other vehicle like a ship, an air plane or the like - that is capable of facilitating communication or data transfer amongst the components, such as controllers, sensors, and/or actuators, of the vehicle. The inventive method and the inventive controller area network bus system might also be implemented - instead of as a Controller Area Network (CAN) - as a FlexRay Network, a Local Interconnect Network (LIN) or other in-vehicle buses. The controller area network bus system 100 comprises a controller area network bus 110 as well as a certain number of electronic control units 120, i.e. entities, devices or nodes of or connected to the controller area network bus system 100 that are able to generate and/or broadcast bus messages to the controller area network bus 110 and/or to receive messages from the controller area network bus 110. In the exemplary representation of Figure 1, a first electronic control unit 121, a second electronic control unit 122, a third electronic control unit 123, and a fourth electronic control unit 124 are schematically shown, even though a typical controller area network bus system 100 might encompass in a typical system or vehicle many more electronic control units 120. In addition to the electronic control units 120, the controller area network bus system 100 also comprises a detection and/or decision entity 130 that is capable to detect and/or receive bus messages on the controller area network bus 110 and is continuously receiving and detecting newly generated or incoming bus messages of or within the controller area network bus system 100.

In Figure 2, an embodiment of the inventive controller area network bus system 100 is schematically shown, further detailing the transmission of bus messages between different electronic control units 120 or components or nodes of the controller area network bus system 100. Typically within an in-vehicle controller area network bus system 100, a continuous stream of bus messages are generated by the numerous electronic control units 120.

According to the present invention, a method for an autonomic or Al-assisted validation and/or rejection and/or decision making regarding bus messages on a controller area network bus system is proposed. According to the inventive method, validation and/or rejection and/or decision making is performed regarding newly incoming bus messages based on the current situation of the system (especially a vehicle) that is reflected by previous or preceding bus messages and based on similar situations that occurred in the past from which a likely or normal behavior is able to be predicted, especially regarding the newly incoming bus messages. In the context of the present invention, the previous or preceding bus messages are designated by reference sign 200, whereas the newly incoming (or specific) bus messages are designated by reference sign 300. This is schematically represented in Figure 2 by means of the electronic control units 120 generating and/or transmitting and/or exchanging and/or receiving a plurality of bus messages 200, and the detection and/or decision entity 130 receiving a newly incoming or specific bus message 300.

In Figure 3, a bus message 200 and a specific bus message 300 are schematically shown. Each one of the plurality of bus messages 200 comprises, respectively, an identifier portion 210 indicating an identifier information, and a data portion 220 indicating a value information. Likewise, the specific (newly generated or incoming) bus message 300 comprises an identifier portion 310 indicating a specific identifier information, and a data portion 320 indicating a specific value information.

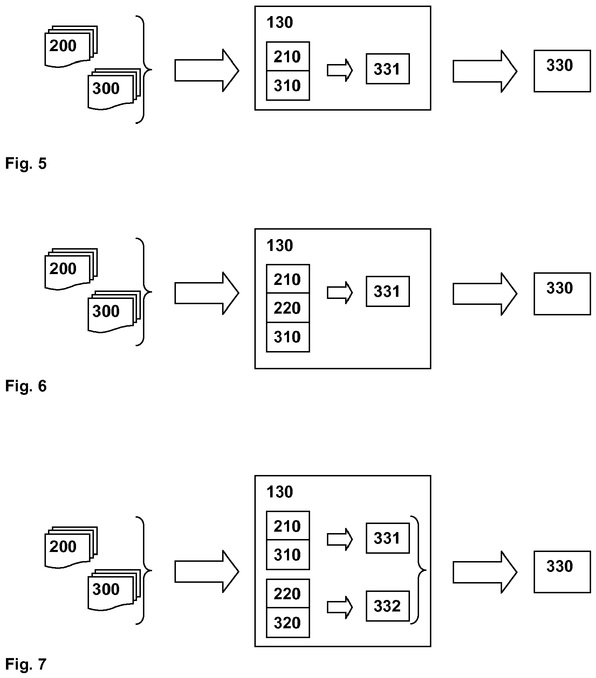

In Figure 4, a functionality according to the inventive method is schematically illustrated, and in Figures 5, 6 and 7 a functionality according to different variants of the inventive method is schematically illustrated.

According to the present invention, a method (as well as a controller area network bus system 100 and a detection and/or decision entity 130) for an autonomic or Al-assisted validation and/or rejection and/or decision making regarding bus messages 200, 300 on the controller area network bus system 100 is disclosed. In the controller area network bus system 100, a plurality of bus messages 200, 300 are continuously exchanged or transmitted between the electronic control units 120 being connected to and/or using the controller area network bus 110, wherein each one of the plurality of bus messages 200, 300 comprises, respectively, an identifier portion 210, 310 indicating an identifier information, and a data portion 220, 320 indicating a value information. In such a controller area network bus system 100 or on such a controller area network bus 110, the bus messages 200, 300 are continuously exchanged or transmitted between the electronic control units 120. Furthermore, typically, each node or each electronic control unit 120 of (or connected to) the controller area network bus 110 is able to both send and receive bus messages 200, 300; however typically not simultaneously. A bus message 200, 300 (also called frame) typically consists of or comprises the identifier portion 210, 310 (or ID part, typically identifying the source node or source electronic control unit 120 as well as representing the priority of the bus message 200, 300), and the data portion 220, 320 (typically a certain number of bits (one binary digit) or bytes (eight binary digits), often, for example, up to eight bytes of data, i.e. the value information of the data portion 220, 320); additionally, further overhead bits might also be part of at least some (or all) bus messages 200, 300, such as, e.g., CRC bits (cyclic redundancy check bits) and/or acknowledge slot bits (ACK). However, as typically multi-master serial bus systems are used as controller area network buses 110 in vehicles and other systems, it is important to note that, at each given point in time, there is, at maximum, one (valid) bus message 200, 300 (or even only a part thereof, especially only one bit of the bus message) existent on the controller area network bus 110. Hence, at each given point in time when a new bus message is generated or transmitted on the controller area network bus 110, the one newly incoming bus message 300 (or specific bus message 300) is uniquely defined and can be differentiated from the (plurality of) previous bus messages 200. According to the present invention, an autonomic or Al-assisted validation and/or rejection and/or decision making regarding this specific bus message 300 is provided, basically in order to be able to decide whether this specific bus message 300 is a "valid" bus message (especially regarding its specific identifier information and/or regarding its specific value information), i.e. a bus message that is to be expected as the next bus message - based on either only one of the preceding bus messages 200, or based on a plurality of preceding bus messages 200, collectively, or even based on a specific subset (e.g. preceding bus messages 200 having a specific identifier portion and/or belonging to a specific set of identifier portions and/or having a specific combination of the identifier portion and the data portion) of the plurality of preceding bus messages 200.

According to the present invention, this autonomic or Al-assisted validation and/or rejection and/or decision making regarding the specific (i.e. newly incoming or generated) bus message 300 is provided by generating (or estimating) - by the detection and/or decision entity 130 - of a plausibility value 330 based on or dependent on both
-- the specific identifier information of the specific bus message 300 and/or the specific value information of the specific bus message 300, and
-- the pieces of identifier information and/or the pieces of value information of bus messages 200 prior to the specific bus message 300.

This is schematically represented in Figure 4, i.e. at the time of the specific bus message 300 being incoming (or transmitted) on the controller area network bus 110, the detection and/or decision entity 130 detects (or receives) this specific bus message 300 (essentially in the same manner as all the other electronic control units 120 are detecting (or receiving) the respective specific bus message 300 being incoming (or transmitted) on the controller area network bus 110). Likewise - and at the considered time of the specific bus message 300 being incoming (or transmitted) on the controller area network bus 110 -, the detection and/or decision entity 130 is (or has previously been) aware of the preceding bus messages 200, i.e. the bus messages that have been incoming (or transmitted) on the controller area network bus 110 prior to this specific bus message 300. Hence according to the present invention, the detection and/or decision entity 130 generates or estimates the plausibility value 330 assigned to the specific bus message 300 (in the context of the preceding bus messages 200).

In Figure 5, a variant regarding the determination or generation of the plausibility value 330 is schematically illustrated. According to this variant (of determination of the plausibility value 330), in a first sub-step during the first step of the inventive method, and based on or dependent on both
-- the specific identifier information (of the identifier portion 310) of the specific bus message 300, and
-- the pieces of identifier information (of the identifier portions 210) of bus messages 200 prior to the specific bus message 300,
a first plausibility indication 331 is generated, by the detection and/or decision entity 130, regarding the specific bus message 300, and the plausibility value 330 (regarding the specific bus message 300) is generated based on or dependent on the first plausibility indication 331 (only). This variant regarding the determination or generation of the plausibility value 330 is especially used in cases that the plausibility value 330 is able to be generated based on the identifier information (of the identifier portion 310) of the specific bus message 300, and the pieces of identifier information (of the identifier portions 210) of bus messages 200 prior to the specific bus message 300, only.

In Figure 6, a further variant regarding the determination or generation of the plausibility value 330 is schematically illustrated. According to this variant (of determination of the plausibility value 330), in the first sub-step during the first step of the inventive method, and based on or dependent on both
-- the specific identifier information (of the identifier portion 310) of the specific bus message 300, and
-- the pieces of identifier information (of the identifier portions 210) as well as the pieces of value information (of the data portions 220) of bus messages 200 prior to the specific bus message 300,
the first plausibility indication 331 is generated, by the detection and/or decision entity 130, regarding the specific bus message 300, and the plausibility value 330 (regarding the specific bus message 300) is generated based on or dependent on the first plausibility indication 331 (only). This variant regarding the determination or generation of the plausibility value 330 is especially used in cases that the plausibility value 330 is able to be generated based on the identifier information (of the identifier portion 310) of the specific bus message 300, and the pieces of identifier information (of the identifier portions 210) as well as of bus messages 200 prior to the specific bus message 300, only.

Regarding both figures 5 and 6, regarding the specific bus message 300, only the identifier information (of the identifier portion 310 is used to generate the plausibility value 330, and a second plausibility indication does not need to be generated.

In Figure 7, a further variant regarding the determination or generation of the plausibility value 330 is schematically illustrated. According to this variant (of determination of the plausibility value 330), the first sub-step as well as a second sub-step of the first step of the inventive method are to be performed. In the first sub-step during the first step of the inventive method, the first plausibility indication 331 is generated according to either the variant of Figure 5 (i.e. based only on the identifier portions of the respective bus messages) or according to the variant of Figure 6 (i.e. based only on the identifier portion of the specific bus message 300 but taking into consideration the pieces of identifier information as well as the pieces of value information of the preceding bus messages 200). In the second sub-step during the first step of the inventive method, the second plausibility indication 332 is generated based on or dependent on both
-- the specific value information (of the data portion 320) of the specific bus message 300, and
-- the pieces of value information (of the data portions 220) of bus messages 200 prior to the specific bus message 300 (or, alternatively, the pieces of value information (of the data portions 220) as well as the pieces of identifier information (of the identifier portions 210) of bus messages 200 prior to the specific bus message 300),
and the plausibility value 330 (regarding the specific bus message 300) is generated based on or dependent on the first plausibility indication 331 and the second plausibility indication 332.

## Claims

1. Method for an autonomic or Al-assisted validation and/or rejection and/or decision making regarding bus messages on a controller area network bus system (100), wherein the controller area network bus system (100) comprises a controller area network bus (110) as well as a plurality of electronic control units (120), wherein in the controller area network bus system (100), a plurality of bus messages (200) are continuously exchanged or transmitted between the electronic control units (120) using the controller area network bus (110), wherein each one of the plurality of bus messages (200) comprises, respectively, an identifier portion (210) indicating an identifier information, and a data portion (220) indicating a value information, wherein the controller area network bus system (100) either comprises or is provided access to a detection and/or decision entity (130), wherein the detection and/or decision entity (130) continuously receives and detects newly generated or incoming bus messages of or within the controller area network bus system (100), wherein - regarding a specific newly generated or incoming bus message (300), the specific bus message (300) comprising an identifier portion (310) indicating a specific identifier information, and a data portion (320) indicating a specific value information - the method comprises the following steps:
-- in a first step, based on or dependent on both
-- the specific identifier information of the specific bus message (300) and/or the specific value information of the specific bus message (300), and
-- the pieces of identifier information and/or the pieces of value information of bus messages (200) prior to the specific bus message (300),
a plausibility value (330) is generated, by the detection and/or decision entity (130), regarding the specific bus message (300), and, especially thereafter, the specific bus message (300) becomes part of the plurality of bus messages (200),
-- in a second step, based on or dependent on the plausibility value (330) regarding the specific bus message (300), a decision is taken regarding the specific newly generated or incoming bus message (300) or the specific newly generated or incoming bus message is accepted or validated and/or rejected.

2. Method according to claim 1, wherein regarding each newly generated or incoming specific bus message (300), the first and second step is executed with the previously specific bus message being part of the plurality of bus messages (200) prior to the specific bus message (300).

3. Method according to one of the preceding claims, wherein,
in a first sub-step during the first step, and based on or dependent on both
-- the specific identifier information of the specific bus message (300), and
-- the pieces of identifier information of bus messages (200) prior to the specific bus message (300), or
the pieces of identifier information of bus messages (200) prior to the specific bus message (300) as well as the pieces of value information of bus messages (200) prior to the specific bus message (300),
a first plausibility indication (331) is generated, by the detection and/or decision entity (130), regarding the specific bus message (300),
wherein, if applicable, in a second sub-step during the first step, and based on or dependent on both
-- the specific value information of the specific bus message (300), and
-- the pieces of value information of bus messages (200) prior to the specific bus message (300), or
the pieces of value information of bus messages (200) prior to the specific bus message (300) as well as the pieces of identifier information of bus messages (200) prior to the specific bus message (300),
a second plausibility indication (332) is generated, by the detection and/or decision entity (130), regarding the specific bus message (300),
wherein either only the first sub-step of the first step is executed, or both the first and the second sub-steps of the first step are executed,
wherein
-- either the plausibility value (330) regarding the specific bus message (300) is generated - especially in case that only the first sub-step of the first step is executed - based on or dependent on the first plausibility indication (331) only,
-- or the plausibility value (330) regarding the specific bus message (300) is generated - especially in case that both the first and second sub-steps of the first step are executed - based on or dependent on the first plausibility indication (331) and based on or dependent on the second plausibility indication (332).

4. Method according to one of the preceding claims, wherein - based on or dependent on the bus messages (200) prior to the specific bus message (300) - a first prediction range information (315) and/or a second prediction range information (325) is generated or identified or retrieved by the detection and/or decision entity (130), wherein the first prediction range information (315) corresponds to an anticipated range of identifier information of the specific identifier portion (310) of the specific bus message (300), wherein the second prediction range information (325) corresponds to an anticipated range of value information of the specific data portion (320) of the specific bus message (300),
wherein the first plausibility indication (331) is based on or dependent on the accordance or overlap between the specific identifier information of the specific bus message (300) on the first prediction range information, wherein, if applicable, the second plausibility indication (332) is based on or dependent on the accordance or overlap between the specific value information of the specific bus message (300) on the second prediction range information.

5. Method according to one of the preceding claims, wherein
-- either autonomic or Al-assisted validation and/or rejection and/or decision making is applied within the detection and/or decision entity (130)
-- and/or autonomic or Al-assisted validation and/or rejection and/or decision making is applied within a further machine intelligence entity - the further machine intelligence entity being especially provided outside of the controller area network bus system (100) - to generate validation and/or rejection and/or decision making rules information to be stored in the detection and/or decision entity (130),
wherein the method comprises the following additional third step prior to the first step:
-- a plurality of bus messages (200) within the controller area network bus system (100), generated during a period of time, are provided to the detection and/or decision entity (130) and/or to the further machine intelligence entity, wherein at least
-- a machine learning approach, and
-- a state machine-based approach
are used to generate validation and/or rejection and/or decision making rules information - especially to be stored in the detection and/or decision entity (130) -, and/or first and/or second prediction range information (315, 325) - especially to be stored in the detection and/or decision entity (130).

6. Method according to one of the preceding claims, wherein, in the third step, the detection and/or decision entity (130) and/or the further machine intelligence entity - besides using a machine learning approach, and a state machine-based approach - uses
-- supervised learning through human interaction, especially in view of performing validation and/or rejection and/or decision making regarding specific bus messages (300), and/or
-- unsupervised learning in view of performing validation and/or rejection and/or decision making regarding specific bus messages (300) and/or,
-- expert system knowledge or expert system information, especially in view of performing validation and/or rejection and/or decision making regarding specific bus messages (300), based on dynamically updated ontologies or semantic knowledge containing bus system knowledge.

7. Method according to one of the preceding claims, wherein by means of the detection and/or decision entity (130), an autonomic agent is realized by means of which an autonomic validation and/or rejection and/or decision making regarding specific bus messages (300) is performed.

8. Controller area network bus system (100) for an autonomic or Al-assisted validation and/or rejection and/or decision making regarding bus messages on the controller area network bus system (100), wherein the controller area network bus system (100) comprises a controller area network bus (110) as well as a plurality of electronic control units (120), wherein in the controller area network bus system (100) is configured such that a plurality of bus messages (200) are continuously exchanged or transmitted between the electronic control units (120) using the controller area network bus (110), wherein each one of the plurality of bus messages (200) comprises, respectively, an identifier portion (210) indicating an identifier information, and a data portion (220) indicating a value information,
wherein the controller area network bus system (100) either comprises or is provided access to a detection and/or decision entity (130), wherein the detection and/or decision entity (130) continuously receives and detects newly generated or incoming bus messages of or within the controller area network bus system (100), wherein - regarding a specific newly generated or incoming bus message (300), the specific bus message (300) comprising an identifier portion (310) indicating a specific identifier information, and a data portion (320) indicating a specific value information - the controller area network bus system (100) is configured such that:
-- based on or dependent on both
-- the specific identifier information of the specific bus message (300) and/or the specific value information of the specific bus message (300), and
-- the pieces of identifier information and/or the pieces of value information of bus messages (200) prior to the specific bus message (300),
a plausibility value (330) is generated, by the detection and/or decision entity (130), regarding the specific bus message (300), and, especially thereafter, the specific bus message (300) becomes part of the plurality of bus messages (200),
-- based on or dependent on the plausibility value (330) regarding the specific bus message (300), a decision is taken regarding the specific newly generated or incoming bus message (300) or the specific newly generated or incoming bus message is accepted or validated and/or rejected.

9. Detection and/or decision entity (130) for an autonomic or Al-assisted validation and/or rejection and/or decision making regarding bus messages on a controller area network bus system (100), wherein the detection and/or decision entity (130) is provided to be used in the controller area network bus system (100) comprising a controller area network bus (110) as well as a plurality of electronic control units (120), and a plurality of bus messages (200) - each one of which comprising, respectively, an identifier portion (210) indicating an identifier information, and a data portion (220) indicating a value information - being continuously exchanged or transmitted between the electronic control units (120) using the controller area network bus (110),
wherein the detection and/or decision entity (130) is configured to continuously receive and detect newly generated or incoming bus messages of or within the controller area network bus system (100), wherein - regarding a specific newly generated or incoming bus message (300), the specific bus message (300) comprising an identifier portion (310) indicating a specific identifier information, and a data portion (320) indicating a specific value information - the detection and/or decision entity (130) is further configured such that:
-- based on or dependent on both
-- the specific identifier information of the specific bus message (300) and/or the specific value information of the specific bus message (300), and
-- the pieces of identifier information and/or the pieces of value information of bus messages (200) prior to the specific bus message (300),
a plausibility value (330) is generated, by the detection and/or decision entity (130), regarding the specific bus message (300), and, especially thereafter, the specific bus message (300) becomes part of the plurality of bus messages (200),
-- in a second step, based on or dependent on the plausibility value (330) regarding the specific bus message (300), a decision is taken regarding the specific newly generated or incoming bus message (300) or the specific newly generated or incoming bus message is accepted or validated and/or rejected.

10. Detection and/or decision entity (130) used in a controller area network bus system (100) according to claim 8.

11. Computer program comprising a computer readable program code which, when executed on a computer or on a detection and/or decision entity (130) or on a further machine intelligence entity or in part on a detection and/or decision entity (130) and in part on a further machine intelligence entity, causes the computer or the detection and/or decision entity (130) or the further machine intelligence entity to perform a method according one of claims 1 to 7.

12. Computer-readable medium comprising instructions which when executed on a computer or on a detection and/or decision entity (130) or on a further machine intelligence entity or in part on a detection and/or decision entity (130) and in part on a further machine intelligence entity, causes the computer or the detection and/or decision entity (130) or the further machine intelligence entity to perform a method according to one of claims 1 to 7.
